# EUROPEAN PATENT APPLICATION

(11) **EP 4 240 029 A1**
(43) Date of publication of application: **06.09.2023**
(21) Application number: 20959840.8
(22) Date of filing: 30.10.2020
(51) Int. Cl.: H04W 4/029, H04W 4/44

(54) **SERVER SELECTION DEVICE AND SERVER SELECTION SYSTEM**

(71) Applicant: MITSUBISHI ELECTRIC CORPORATION, Chiyoda-ku Tokyo 100-8310 (JP)
(72) Inventor: ISHIDA, Ryo, Tokyo 100-8310 (JP); NISHIWAKI, Takeshi, Tokyo 100-8310 (JP); TAKEHARA, Takayoshi, Tokyo 100-8310 (JP)
(74) Representative: Hoffmann Eitle
(86) International application number: PCT/JP2020/040755
(87) International publication number: WO 2022/091322

(57) **Abstract**

A server selection device (11) is provided in a server (1) which performs communications with a motor vehicle (20), and a server determination unit (117) is provided in the server selection device (11) that selects a server (1) from the information of surroundings, and promotes a motor vehicle (20) to connect to the server (1). The server determination unit (117) selects, from among a plurality of such servers (1) capable of connecting the motor vehicle (20), one server (1) by which its connection time can be longer in its connection than that by another server (1), based on a running route of the motor vehicle (20) and coverage area information of the server (1), so that server information on a server (1) to be connected next is transmitted to the motor vehicle (20).

## Description

### TECHNICAL FIELD

The disclosure of the present application relates to a server selection device and a server selection system.

### BACKGROUND ART

In Patent Document 1, a data management scheme is disclosed in which, by using motor vehicle information (position information, speed information) transmitted from a motor vehicle, a server(s) to which the motor vehicle performs communications next is selected and connected each other, whereby limitations are imposed on the counterpart servers into which data is to be reproduced.

### RELATED ART DOCUMENT

### Patent Document

[Patent Document 1] Japanese Patent Laid-Open No. 2018-117266

### SUMMARY OF THE INVENTION

Problems to be Solved by the Invention

A technology of Patent Document 1 takes on a configuration in which a server records latitude and longitude information and speed information at the timing when a connection-server management terminal device performs a service request with respect to the server, and in which, from the record information, selection of a server to connect next is performed, and reproduction of data on server information and that of data on service information are performed. However, in the technology of Patent Document 1, estimation of a moving direction is performed, and servers each having a possibilities of connections are predicted by using area-entering probabilities, whereby it is possible to narrow down servers to a certain extent, but reproduction of wasteful data into a server(s) is performed because it is not possible to narrow down the servers to one server.

The present disclosure in the application concerned has been directed, as an object of the disclosure, at curbing the amount of data being reproduced into a server(s) by selecting among the servers one optimal server to which a motor vehicle is to connect next.

### Means for Solving the Problems

A server selection device disclosed in the disclosure of the application concerned is a server selection device which comprises: a communications unit for performing communications with a dynamic map provision server for providing a dynamic map for use in an operation of a server and in that of a motor vehicle; a management unit for managing motor vehicle information being acquired, and a coverage area of a server; a motor vehicle information reception unit for receiving motor vehicle information; a surroundings information acquisition unit for acquiring a traffic situation and accident information from the dynamic map provision server; a service content processing unit for processing a server request transmitted from a motor vehicle, and for performing a service response to the motor vehicle; a new server management unit for performing transmission/reception of data with a new server when the new server is placed; and a server determination unit for determining a server to connect a motor vehicle next thereto, wherein the server determination unit selects, from a running route of a motor vehicle and coverage area information of a server, one server from a plurality of servers capable of connecting the motor vehicle to which a connection time is longer than another server capable of connecting the motor vehicle, and transmits to the motor vehicle server information on a server being selected to connect next.

### Effects of the Invention

According to the server selection device disclosed in the disclosure of the application concerned, it is possible to select one server among servers on the basis of a running route(s) and on that of position information. In addition, from coverage area information of other servers and a running route(s) which are held in a server, a server is selected which can connect longer in its connection time than the other servers, whereby it becomes possible to narrow down servers to one server for the connection, and thus it is possible to curb reproduction of wasteful data into a server(s).

### BRIEF DESCRIPTION OF DRAWINGS

FIG. 1 is a schematic configuration diagram illustrating a server selection system according to Embodiment 1;
FIG. 2 is a block diagram illustrating a server selection device according to Embodiment 1;
FIG. 3 is a diagram for explaining motor vehicle information according to Embodiment 1;
FIG. 4 is a diagram for explaining server information according to Embodiment 1;
FIG. 5 is a diagram illustrating a hardware configuration of a motor vehicle according to Embodiment 1;
FIG. 6 is a block diagram illustrating a connection-server management terminal device in the server selection device according to Embodiment 1;
FIG. 7 is a diagram for explaining a server selection scheme according to Embodiment 1 in comparison with a conventional scheme;
FIG. 8 is a sequence diagram for explaining processing procedures between the motor vehicle and servers according to Embodiment 1;
FIG. 9 is a flowchart diagram for explaining the server selection device according to Embodiment 1;
FIG. 10 is a block diagram illustrating a server selection device according to Embodiment 2;
FIG. 11 is a diagram for explaining the server selection device according to Embodiment 2;
FIG. 12 is a diagram for explaining a server connection-time estimation unit according to Embodiment 2;
FIG. 13 is a flowchart diagram for explaining processing procedures of the server selection device according to Embodiment 2; and
FIG. 14 is a block diagram illustrating a server selection system according to Embodiment 2.

### EMBODIMENTS FOR CARRYING OUT THE INVENTION

### Embodiment 1.

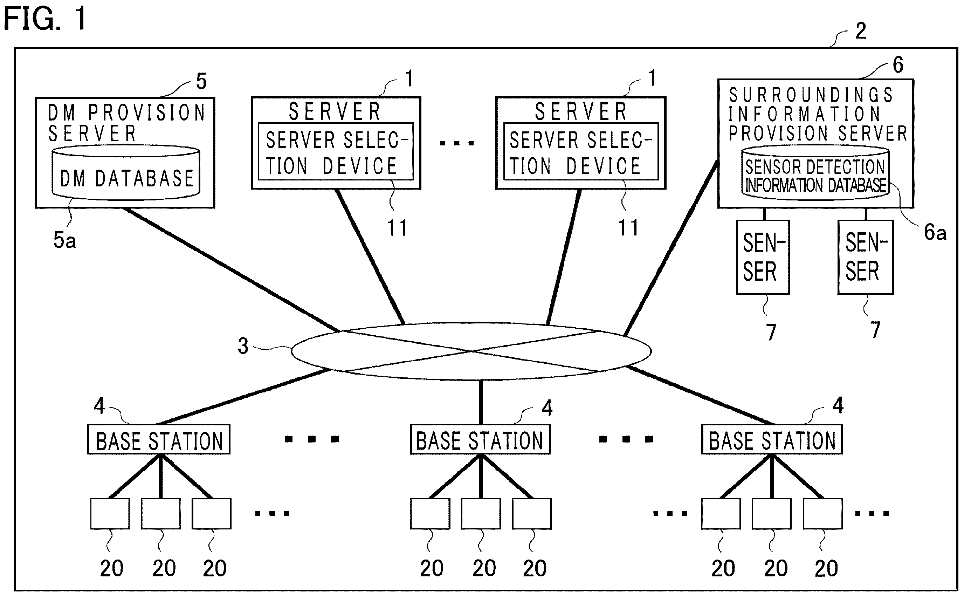

The explanation will be made referring to the drawings for a server selection system 2 comprising a server selection device 11 according to Embodiment 1 and a connection-server management terminal device 30 mounted on each of a plurality of motor vehicles 20. FIG. 1 is a diagram illustrating a schematic overall configuration of the server selection system 2.

The server selection device 11 is provided in a server 1 connected to a network 3. Namely, the server 1 executes software applications (programs) of the server selection device 11, whereby the functions of the server selection device 11 are achieved. In the embodiment, a plurality of such server selection devices 11 is provided, so that they act on service requests of a plurality of motor vehicles and select servers each to be connected next thereto. In addition, the server is defined to act as an MEC (Multi-Access Edge Computing) server, for example. The details of the MEC are described in the literature (ETSI GS MEC 003 V2.1.1 (2019-01)), for example. The network 3 is defined as a core network, for example. The server selection devices 11 and thus the servers 1 may be each set near regional areas to be controlled.

The server selection devices 11, a plurality of motor vehicles 20, a DM (dynamic map) provision server 5, a surroundings information provision server 6 are mutually connected to be capable of communicating one another by way of the network 3. The network 3 is a wireless or radio communications network such as the Internet network, a wireless or radio LAN (Local Area Network), or the like, for example. Note that, a case (embodiment) is indicated in which each motor vehicle 20 is connected to the network 3 via a base station 4.

The DM provision server 5 includes a DM database 5a (for example, hard disk) for holding dynamic maps constituting dynamic road environment information required to achieve automated driving of the motor vehicle 20. The DM provision server 5 repeatedly updates a dynamic map(s) stored in the DM database 5a on a regular basis. The DM provision server 5 acquires data of a dynamic map(s) from the DM database 5a in accordance with a regular request from the motor vehicle 20 or the server selection devices 11, and, each on demand basis, transmits the data to the motor vehicle 20 or the server selection devices 11.

Here, the dynamic map is representative of digital geographic map data in which, for example, information of a position(s) at which a dynamic change(s) is caused by a traffic restriction or the like due to congestion information of road, an accident or road work is combined with static and three-dimensional geographic map data of a high degree of accuracy. The motor vehicle 20 uses a dynamic map(s) provided from the DM provision server 5, whereby automated driving can be carried out on the basis of a detection output(s) of sensors (for example, a millimeter-wave radar, an ultrasonic sensor, an optics or optical camera and the like) mounted on the host motor vehicle while accurately selecting surrounding environment information.

In order to distinguish a situation (s) of real time environments on roads (for example, detection and gathering of dynamic changes of congestion, an accident, road work or the like described above) on which the motor vehicle 20 runs, the surroundings information provision server 6 is placed in an appropriate manner (for example, in a plurality of surroundings information provision servers). The surroundings information provision server 6 includes a sensor detection information database 6a for holding information (sensor detection information) detected by means of a plurality of monitoring sensors 7, where the plurality of monitoring sensors 7 is connected with respect to one surroundings information provision server 6, for example. In order to detect a situation(s) of environments on roads in real time, the plurality of monitoring sensors 7 is placed on utility poles along a road, poles of expressway, guard rails and/or the like, for example.

On the basis of sensor detection information detected by means of the plurality of monitoring sensors 7, the surroundings information provision server 6 distinguishes whether congestion, an accident, road work and/or the like are exemplarily caused on a road, and transmits road information including information of the position of occurrence to the DM provision server 5 and to the motor vehicle 20. The road information is used at a time of updating a dynamic map(s) in the DM provision server 5, for example.

Each motor vehicle 20 is connected to a nearby base station 4 by means of radio communications. A plurality of such base stations 4 is placed at each point of location in a distributed manner so that they can cover a road network. The base station 4 is a wireless or radio station which performs radio communications with the connection-server management terminal device 30 mounted on a motor vehicle existing within a communication area, as will be described later, by using radio communications standards of cellular communication schemes such as "4G," "5G" and the like, and so, the base station is connected to the network 3. Because of this configuration, each motor vehicle 20 and the server selection device 11 are connected by way of the base station 4 and the network 3 through the communications with each other.

The explanation will be made for a configuration of the server selection device 11.

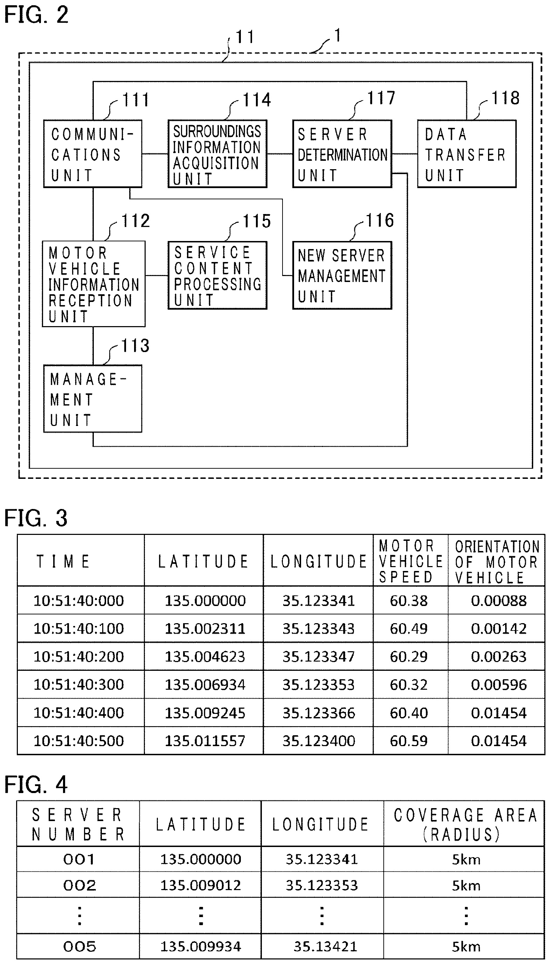

FIG. 2 illustrates a block diagram of the server selection device 11. The server selection device 11 comprises a communications unit 111, a motor vehicle information reception unit 112, a management unit 113, a surroundings information acquisition unit 114, a service content processing unit 115, a new server management unit 116, a server determination unit 117, a data transfer unit 118, and the like.

The communications unit 111 performs communications with a plurality of motor vehicles 20, and with other servers 1, the DM provision server 5 and the like. In the embodiment, the communications unit 111 is connected to the network 3 as described above, and performs communications with the motor vehicle(s) 20 which transmits a service request(s) by way of the network 3 and the base station(s) 4. In addition, in order to select the servers 1 to which a target or subject-matter motor vehicle 20 is to connect next, the communications unit 111 performs communications with another server or other servers 1, and with the DM provision server 5 and the surroundings information provision server 6. It can be said that the subject-matter motor vehicle 20 is the motor vehicle 20 that is positioned within a coverage area where the server 1 is controlling, for example.

The motor vehicle information reception unit 112 receives from each motor vehicle 20 information of a running route and that of a motor vehicle's speed, and position information. In the embodiment, a running route designates time sequence or series data in each time constituted of a position (a latitude, a longitude and an altitude) of the motor vehicle 20, a speed of the motor vehicle 20, and the orientation of the motor vehicle 20 and the like. In FIG. 3, an example of time series data of a running route is shown. In the example of FIG. 3, each piece of the time series data is constituted of a time, a latitude, a longitude, a motor vehicle speed, the orientation of a motor vehicle (for example, an orientation in a forward or rearward direction of the motor vehicle 20).

From the DM provision server 5, the surroundings information acquisition unit 114 performs the acquisition of a traffic condition or situation on a running route, information of an accident thereon and that of work thereon, and geographic map information. In the embodiment, a subject-matter motor vehicle 20 makes a running route from the work information and geographic map information, whether or not an accident occurs on the running route of the subject-matter motor vehicle 20. Moreover, in Embodiment 2, those pieces of information are used as determination bases for performing determination whether or not the motor vehicle 20 is safe if communications between the motor vehicle 20 and a server 1 is disrupted, because the communications between the motor vehicle 20 and the server 1 is disrupted for a time to a slight extent.

The service content processing unit 115 processes a service request at a time when the request for a service with respect to the server 1 is received from the connection-server management terminal device 30, and transmits a response for the service request to the connection-server management terminal device 30. In the embodiment, the service may be the verification of traffic information or the like, which ought to relate to the steering of the motor vehicle 20, such as the production of a running route up to a destination place of the motor vehicle 20, the verification of traffic information in the surroundings, a motor vehicle's lane changeover, and the like. Moreover, it may be so arranged that, when a service request does not reach from the connection-server management terminal device 30 of the motor vehicle 20 within a predetermined time (threshold value), the service content processing unit makes notification with respect to the connection-server management terminal device 30 to transmit a tentative or dummy service request. According to this arrangement, even for a case in which a service request does not reach from a motor vehicle during the connection because its connection time of a server to which the motor vehicle connects next is set for a time to a slight extent, the threshold value is thus defined as described above, whereby the service content processing unit can receive the dummy service request, so that it becomes also possible to further select a server to connect next. The threshold value may be defined as 0.1 second, 1 second or the like. In addition, it is not necessarily limited to the times described here, and so, a threshold value may also be defined other than those described above.

In the new server management unit 116, when a server 1 having been already placed receives "operation information" which is transmitted in a case in which another server 1 is newly placed in a transit system and then it starts up its operation, the already-existing server 1 stores information of the new server 1, and performs the update of data; and thus, reproduction of data of the new server 1 is performed with respect to a surrounding server(s) 1. In addition, with respect to the new server 1, the surrounding and already-existing server(s) 1 performs reproduction of data-information in the already-existing server(s) 1 and that of a software application(s) therein, where the new server 1 does not hold them yet. In the embodiment, the "operation information" designates information of server number, a placement location (a latitude and a longitude), a coverage area and the like, as an example of the information is shown in FIG. 4.

The management unit 113 stores information acquired from the motor vehicle information reception unit 112, the surroundings information acquisition unit 114 and the new server management unit 116, and stores the contents having been processed by the service content processing unit 115, which are then managed by the management unit 113.

The server determination unit 117 performs determination on a server 1 to which a target or subject-matter motor vehicle 20 is to connect next, from information stored in the management unit 113, and from surroundings information of the DM provision server 5 and geographic map information thereof. In order to select a server 1 so that wasteful data transfer is avoided as much as possible at a time when the determination on the server 1 is performed, the server determination unit 117 selects the server 1 by which the subject-matter motor vehicle 20 connects to the same server 1 as long as possible on the basis of a running route stored in the management unit 113, on that of geographic map information of the DM provision server 5 and on that of coverage area information of another server or other servers 1; and also, through the data transfer unit 118, the server determination unit 117 gives an indication of reproduction of data on server information and that of transfer of service information to the server 1 having been selected. However, it may be so arranged that a server 1 whose radio-wave intensity is at the strongest or a server 1 whose processing load is low is selected regardless of its connection distance, in a case in which an accident occurs in the surroundings and/or a case in which there exists a possibility in that the safety of a motor vehicle(s) may not be maintained because there would be disturbance in the running of the motor vehicle(s) being brought about as a cause by communication delay in the network, and/or in a case in which there exists a possibility in that a processing load of a target or subject-matter server 1 is high, so that a service request of the subject-matter motor vehicle 20 cannot be satisfied.

The data transfer unit 118 performs reproduction of data on the contents or the like currently being processed, with respect to a server 1 having been selected by a target or subject-matter motor vehicle 20 which selects the server 1 to connect next through the server determination unit 117, in accordance with motor vehicle information having been transmitted from the subject-matter motor vehicle 20 up to a current time and with a service request having been transmitted from the subject-matter motor vehicle 20 up to the current time.

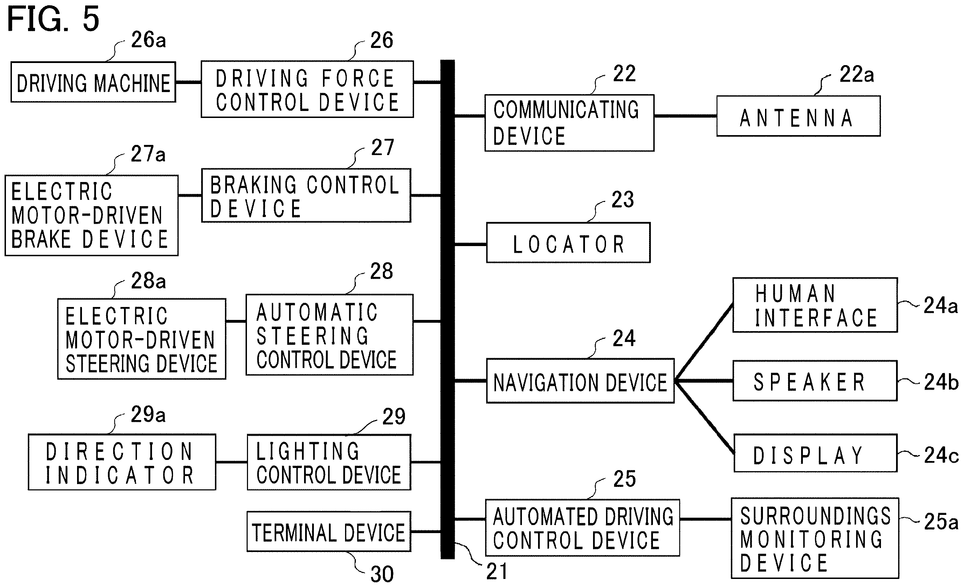

FIG. 5 illustrates a schematic configuration of a system mounted on each motor vehicle 20. Each motor vehicle 20 includes an onboard network 21, a communicating device 22, a locator 23, a navigation device 24, an automated driving control device 25, a driving force control device 26, a braking control device 27, an automatic steering control device 28, and a lighting control device 29, the connection-server management terminal device 30 and the like.

The onboard network 21 is a network which performs, through the communicating device 22, mutual communications between a plurality of devices and units for the connection-server management terminal device 30. For example, communications standards such as a CAN (Controller Area Network), Ethernet, Flexray and the like are used.

The communicating device 22 is a communicator or communicating device which performs, by using its antenna 22a, radio communications with the base station 4 existing within a communication area, so that the communicating device performs data communications with the server 1. In addition, the communicating device 22 may perform communications with a nearby motor vehicle(s).

The locator 23 is a device which recognizes a position of host motor vehicle, and the locator includes a GPS antenna, an acceleration sensor, an orientation sensor and the like. The locator 23 recognizes highly accurate position information of a host motor vehicle by performing the matching between position information (a latitude, a longitude and an altitude) of the host motor vehicle obtained from its GPS antenna or the like and geographic map data of a high degree of accuracy, and the matching between information or the like obtained from its surroundings monitoring device 25a and the map data.

The navigation device 24 determines a target route from a current position up to a target point of location, based on the current position of a host motor vehicle obtained from the locator 23, the target point of location, geographic map data and a road condition or situation. The navigation device 24 includes a human interface 24a, and accepts the setting of a target point of location by means of on-vehicle personnel. The navigation device 24 outputs its navigation information to a speaker 24b and on a display 24c, which can be presented to the on-vehicle personnel.

The automated driving control device 25 is a device for performing recognition, determination and controls for the sake of automated driving. By using a sensor(s) and communications, surroundings information is gathered, so that corrections and adjustments are performed for enabling the motor vehicle 20 to run safely. For the purpose of monitoring a surroundings situation(s), a camera, a radar and the like are used. As for the radar, a millimeter-wave radar, a laser radar, an ultrasonic radar and the like are used.

The driving force control device 26 controls an output(s) of a driving machine(s) 26a such as an internal-combustion engine, a motor(s) and the like so that a speed of host motor vehicle follows up a target speed. The braking control device 27 controls a brake operation of an electrically operated brake device 27a so that the speed of host motor vehicle follows up a target speed. The automatic steering control device 28 controls an electric motor-driven steering device 28a so that a steering angle follows up a target steering angle. The lighting control device 29 controls a direction indicator 29a by obeying an operation instruction of turn indicator.

Note that, the automated driving control device 25 performs automated driving of autonomous avoidance in accordance with a surrounding running condition or situation obtained from the surroundings monitoring device 25a or the like, in a case in which it is necessary to take on urgent avoidance driving such as collision avoidance or the like with another motor vehicle or other motor vehicles, an obstacle(s) and a pedestrian(s).

It should be noted that, because a configuration of a motor vehicle having automated driving functions differs depending on a motor vehicle manufacturing company, the configuration may differ from that described according to the present disclosure of the application concerned; however, it is possible to configure the server selection system disclosed in the disclosure of the application concerned, if such a motor vehicle 20 at least transfers its motor vehicle information to the server selection device 11 and the motor vehicle runs obeying the server 1 having been notified from the server selection device 11 and thus being selected.

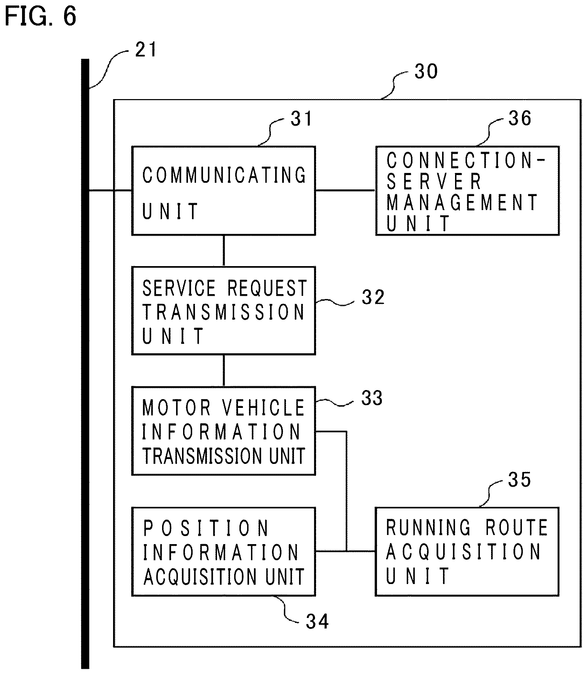

In FIG. 6, the explanation will be made for the connection-server management terminal device 30 that is mounted on a motor vehicle. The connection-server management terminal device 30 is a device which performs connection with the server 1 to perform communications, transmission of a service request from on-vehicle personnel, reception of service request processing information transmitted from the server 1, reception of server information transmitted from the server 1 so as to perform communications next thereto, transmission of motor vehicle information, and the like.

A communicator or communicating unit 31 performs communications with the server 1 and the DM provision server 5. In the embodiment, the communicating unit 31 performs reception of surroundings information from the DM provision server 5 and geographic map information therefrom at a time when a running route is generated; the communicating unit performs, with respect to the server 1 to which a motor vehicle(s) is connected to, transmission of its motor vehicle information, and transmission of a service request from the on-vehicle personnel; and the communicating unit performs reception of service request processing information transmitted from the server 1 being connected, and reception of information or the like of the server 1 to which a target or subject-matter motor vehicle is connected next.

The service request transmission unit 32 transmits, to a server (s) as a service request, a process in a case in which a running route is requested to be generated by the server 1 where the running route is set for a destination place and/or is reset therefor and/or is set for a place to make a stop alongside up to the destination place by the on-vehicle personnel using, for example, an HMI (Human Machine Interface); or the service request transmission unit transmits thereto a process in a case in which a motor vehicle's lane changeover and/or a right or left turn are requested to be performed by the server 1. In addition, as for the service request, a request other than the service request described herein may be set, and/or the service request may be set by other than the HMI.

The motor vehicle information transmission unit 33 acquires sensor information having been acquired by the surroundings monitoring device 25a and a running route of the motor vehicle 20 having been generated from the automated driving control device 25 by means of a running route acquisition unit 35, and performs, as motor vehicle information, transmission of the sensor information and that of the running route at a time when the motor vehicle makes a service request with respect to the server 1. The position information acquisition unit 34 acquires a current position of the motor vehicle by using its sensor information in which its surroundings monitoring device 25a has acquired. The current position having been generated forms a positional coordinate system at three points of a latitude, a longitude and an altitude.

As for the running route acquisition unit 35, when on-vehicle personnel sets a destination place by using, for example, an HMI, work information and/or accident information up to a destination place are requested to be transmitted from the DM provision server 5, so that the automated driving control device 25 generates an optimal running route from those pieces of information. In addition, detailed settings may be performed by the HMI in such a case that on-vehicle personnel wants to run by way of a roadway, a case that the on-vehicle personnel wants to run by using an expressway, or the like. Moreover, it may be so arranged that, without generating a running route on the motor vehicle's side, a running route is made to be generated on the server's side, so that the running route is received from the server and then the running route is used.

A connection-server management unit 36 stores information of a server to be connected next which is transmitted from the server 1 being connected, so that, at a time when a motor vehicle exits outside of a coverage area of the server 1 to which the motor vehicle is currently connected, the motor vehicle makes a connection application or request with respect to a next server 1, and then, the motor vehicle connects to the server. In another manner, in a case in which a connection time of a server 1 to connect next is short and a case in which the safety of the running of a motor vehicle cannot be secured, a connection request is performed at a time when the motor vehicle enters within the coverage area of a server 1 to connect next, so that the motor vehicle connects to the server.

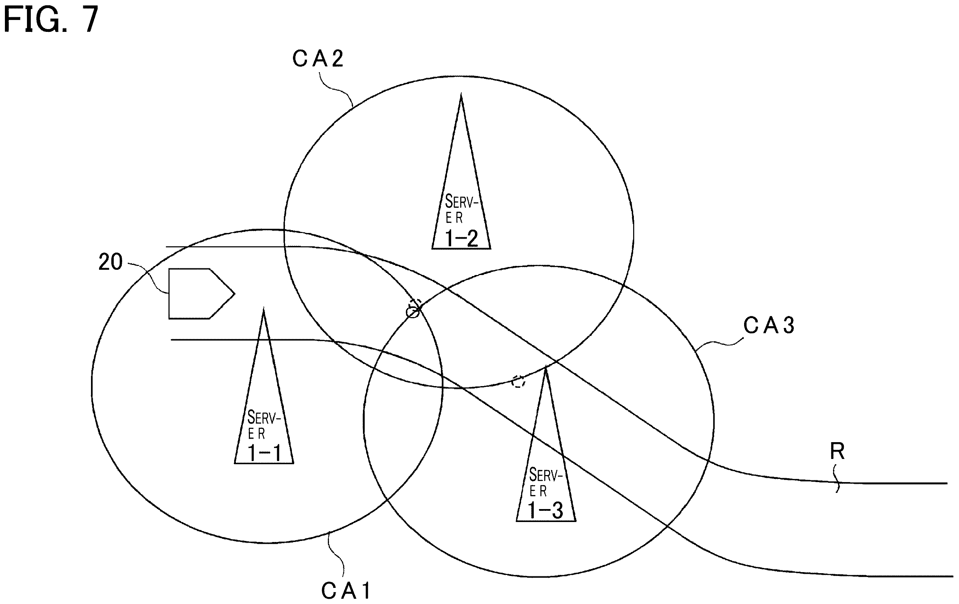

FIG. 7 is a diagram for explaining a server selection scheme according to Embodiment 1 in comparison with a conventional scheme.

Namely, a case is exemplified in which a motor vehicle 20 runs on along a running route R, so that servers are continuously changed over from one to another, for example. According to a conventional scheme, when the motor vehicle 20 is positioned outside of a coverage area of a server 1-1, a possibility is conceivable in which the motor vehicle may connect with a server 1-2 and a server 1-3. For this reason, reproduction of server information-data is performed with respect to the server 1-2 and to the server 1-3, and then, the motor vehicle is connected to the server 1-2. Next, when the motor vehicle 20 is positioned outside of a coverage area of the server 1-2, reproduction of server information-data is performed with respect to the server 1-3 because there exists no server other than the server 1-3 which has a possibility to connect, so that the motor vehicle results in connecting to the server 1-3. Therefore, because the motor vehicle 20 did not make connection with the server 1-3 at the time when the motor vehicle has exited outside of the coverage area of the server 1-1, reproduction of server information-data results in being performed with respect to the server 1-2, and then, reproduction of data results in being performed with respect to the server 1-3 for the second times. Namely, the small broken-line circles result in being server's changeover positions. As a result, risks are conceivable in which workloads are put upon with respect to the server 1-2 and to the server 1-3.

On the other hand, according to Embodiment 1, a changeover position results in at one place as the small solid-line circle in FIG. 7.

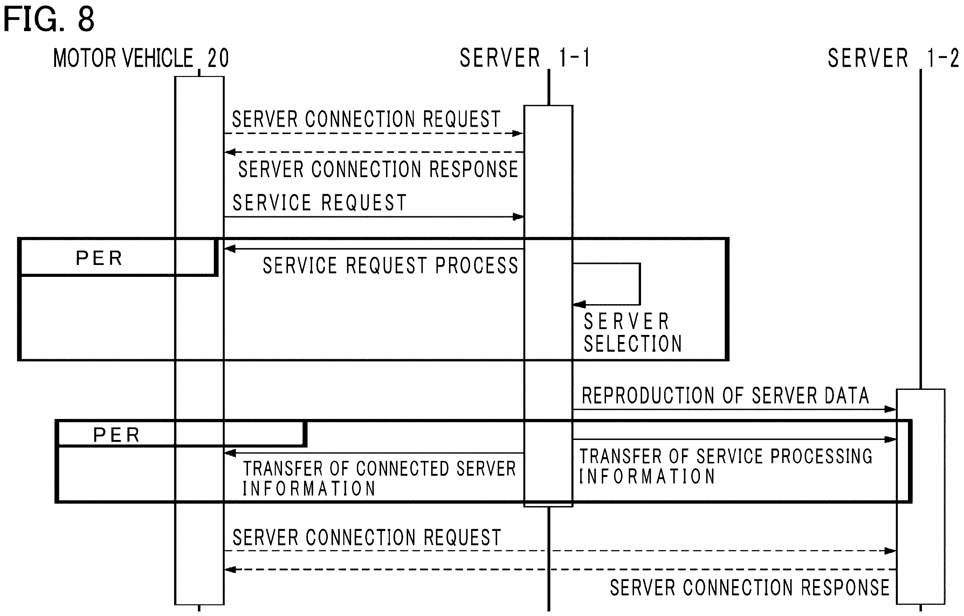

The explanation will be briefly made referring to a sequence diagram of FIG. 8 for the relationships between the motor vehicle 20 of Embodiment 1 and the servers 1 thereof.

First, the motor vehicle 20 performs a connection request with respect to a server 1-1 existing within a coverage area of the server 1-1. A connection response is returned from the server 1-1, whereby notification is made to the motor vehicle 20 by which the connection of the server 1-1 with the motor vehicle 20 has been completed. As for the server 1-1 to be connected firstly, a request may be made to a server existing on along a running route in a case in which there exists the strength of radio-wave intensity and/or there already exists the running route.

Next, the motor vehicle 20 performs transmission of a service request with respect to the server 1-1. When the server 1-1 receives the service request from the motor vehicle 20, a software application(s) of the server selection device 11 is started up. In the server selection device 11, the processing with respect to the service request is firstly executed, and a processing result is transmitted with respect to the motor vehicle 20. When the processing of the service request is ended, the server 1-2 to which the motor vehicle 20 is to connect next is selected. The explanation will be made referring to a flowchart of the server selection device 11 for the flows for selecting the server 1-2 as will be described later.

Next, the server 1-1 simultaneously carries out reproduction of data on server information with respect to the server 1-2 having been selected and transfer of service processing information therewith, and transfer of connected server information on the server 1-2 having been selected with respect to the motor vehicle 20.

Subsequently, when the motor vehicle 20 receives from the server 1-1 information of the server 1-2 having been selected to be connected next, the information is stored in the connection-server management unit 36. At the time when the motor vehicle 20 exits outside of the coverage area of the server 1-1 currently connecting, the motor vehicle performs a connection request with respect to the server 1-2 having been selected on the basis of the information in the connection-server management unit 36. When the server 1-2 received the connection request, the server 1-2 sends back a connection response with respect to the motor vehicle 20, and notifies with respect to the motor vehicle 20 that the connection has been completed.

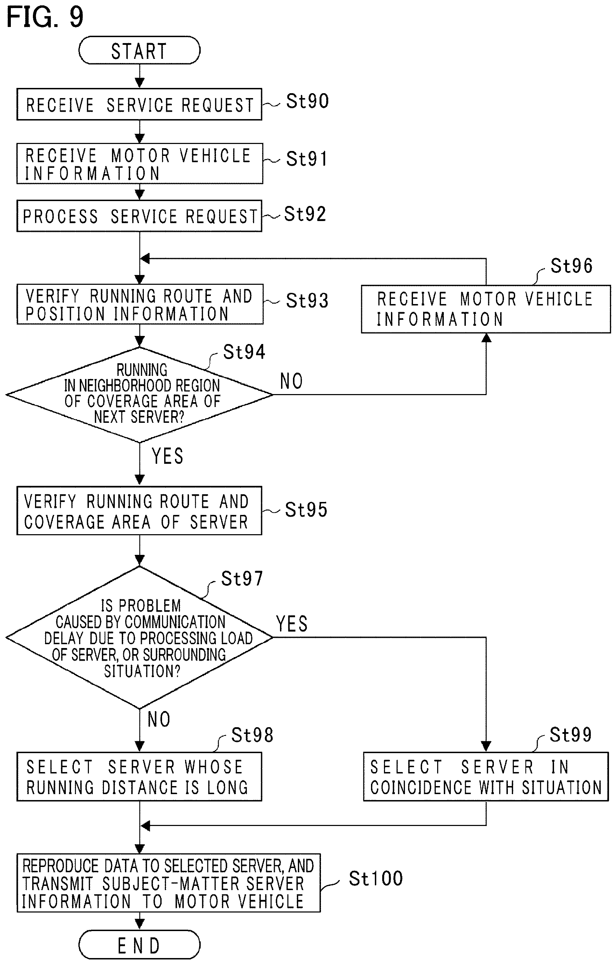

From this time onward, the explanation will be made referring to a flowchart of FIG. 9 for the processing in which the server selection device 11 performs.

At Step St 90, a service request is received from the connection-server management terminal device 30 of a motor vehicle. As for the service request, a service number is related to. For example, in a case in which a service request is made with respect to a server 1 for the first time, the service number is related to "1." At Step St 91, the server selection device receives motor vehicle's information from the connection-server management terminal device 30, so that motor vehicle's information is acquired. At Step St 92, the processing is carried out in accordance with the service request transmitted from the connection-server management terminal device 30.

At Step St 93, position information on the motor vehicle's information acquired at Step St 91 is verified. At Step St 94, determination is performed whether or not a motor vehicle 20 is positioned in a neighborhood region of a coverage area of a next server 1 existing in the surroundings. In a case of being positioned in the neighborhood region, the processing proceeds to Step St 95, whereas, in another case other than the aforementioned case, the processing proceeds to Step St 96.

At Step St 96, a transmission request is performed with respect to a motor vehicle(s), and motor vehicle information is received therefrom, so that the processing returns to Step St 93. The loop (repeated processing) is performed until a motor vehicle(s) moves in the neighborhood region of the coverage area of the next server 1.

At Step St 95, a distance is calculated in which the motor vehicle can connect to a server 1, from a running route in motor vehicle information, and from information of the coverage area of the server 1 in which a possibility of connection is conceivable. As for the calculation of a connection distance of the server 1, the distance in the coverage area where the motor vehicle runs may be calculated as the connection distance in view of the running route and the coverage area of the server 1.

At Step St 97, the processing proceeds to Step St 99, when there is a problem because of a case in which there exists a possibility in that the safety of a motor vehicle(s) may not be maintained because communication delay in the network is brought about as a cause, and/or because of a case or the like in which a processing load of a target or subject-matter server 1 is high, so that there exists a possibility in that a service request of a target or subject-matter motor vehicle cannot be satisfied. In a case in which there is no particular problem, the processing proceeds to Step St 98.

At Step St 98, a server 1 whose connection distance is at the longest is selected as a server to which the motor vehicle connects next.

At Step St 99, in a case in which communication delay is brought about as a cause, a server 1 whose radio-wave intensity is at the highest is selected. In a case in which a processing load of server is high, a server 1 whose processing load is low is selected.

At Step St 100, reproduction of service information and that of motor vehicle information are performed to a server 1 having been selected at Step St 98 or Step St 99, and then, information of the server having been selected is transmitted to the motor vehicle, whereby the processing of the server selection device 11 is ended.

### Embodiment 2.

Next, the explanation will be made for a server selection device according to Embodiment 2. The explanation is omitted for similar constituent elements or portions to those in Embodiment 1 described above. A fundamental configuration of the server selection device 11 according to the embodiment and the processing thereof are similar to those in Embodiment 1. In the embodiment, at a time when a server 1 to connect to a target or subject-matter motor vehicle is selected by the server determination unit, information of a server connection-time estimation unit is also taken into consideration for determining the server 1, which is a point differing from Embodiment 1.

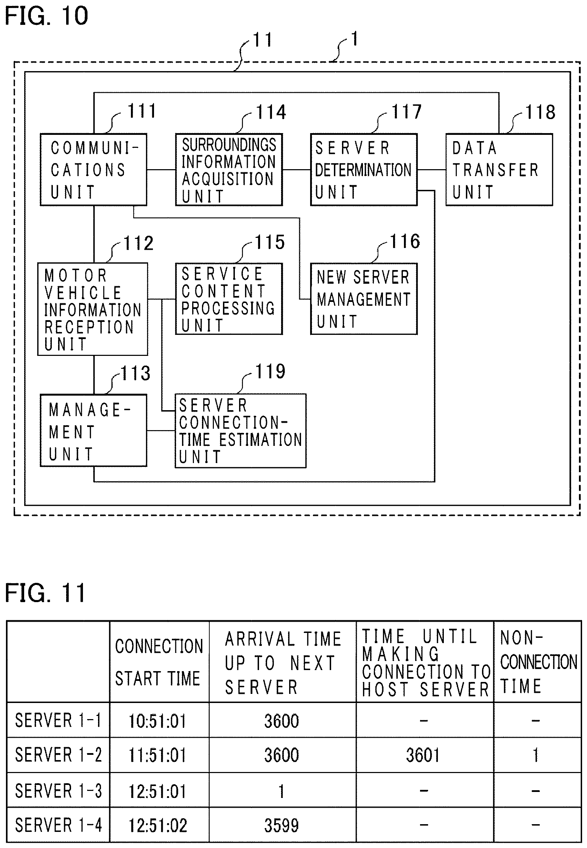

In FIG. 10, illustrated is a block diagram of the server selection device 11 according to the embodiment. The server selection device 11 comprises a server connection-time estimation unit 119.

In a case in which a motor vehicle makes a U-turn or makes a right or left turn, a case or the like is conceivable in which the motor vehicle instantaneously connects to the server 1, and it immediately reconnects to the original server 1. In this case, even in such instantaneous connection, reproduction of data is performed to the server 1, and so, there exists a possibility in that the amount of data is suppressed.

For dealing therewith, the server connection-time estimation unit 119 performs the estimation of a connection time for every one of surrounding servers 1, by using a running route in motor vehicle information transmitted from the connection-server management terminal device 30, speed information therein, road information of the DM provision server 5, a surroundings motor vehicle situation thereof and/or the like, and by defining a case in which a motor vehicle connects to a surrounding server 1 at a current running speed of the motor vehicle. In the embodiment, the connection time is constituted of four pieces of information as shown in FIG. 11: a connection start time; an arrival time up to a next server; a time until making connection to the host server itself in the next time; and a non-connection time.

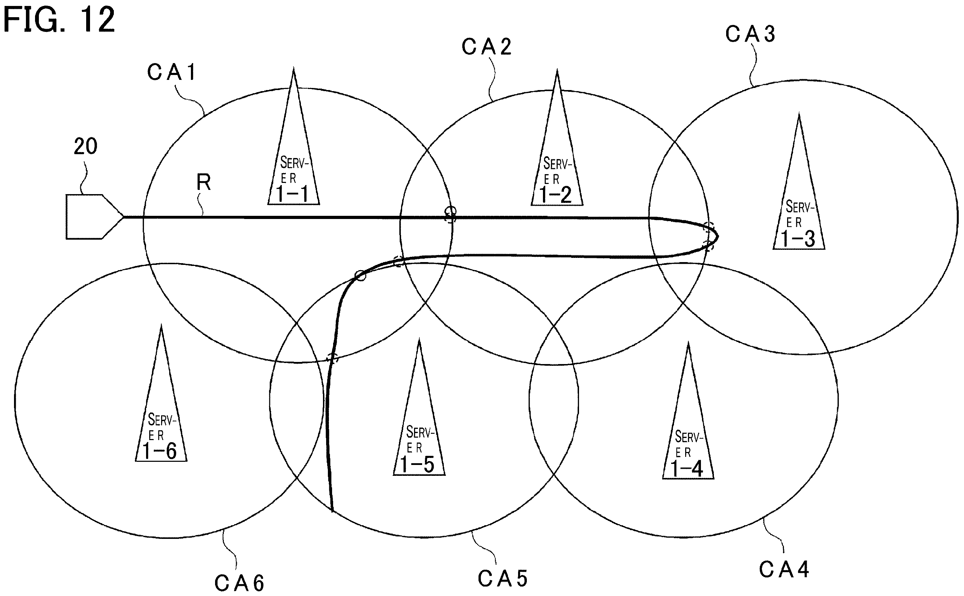

The explanation will be made referring to FIG. 12 for an example. In FIG. 12, the curve shows a running route of a motor vehicle 20; the triangles, servers; the large circles, coverage areas of the servers each; the small solid-line circles, changeover positions of servers 1 in the embodiment; and the small broken-line circles, changeover positions of servers in related art.

Firstly, it is presumed that a motor vehicle connects to a server 1-1. A first changeover point of location of server occurs when the motor vehicle exits outside of a coverage area of the server 1-1. In FIG. 12, because there exists one coverage area in which the motor vehicle is to connect to a server next, the motor vehicle connects to a server 1-2 in both of the related art and the embodiment.

Next, a second changeover point of location of server occurs when the motor vehicle exits outside of a coverage area of the server 1-2. In FIG. 12, the motor vehicle makes a U-turn. In the related art, the motor vehicle connects to a server 1-3, and the motor vehicle connects once again to the server 1-2 when the motor vehicle exits outside of a coverage area of the server 1-3.

However, in Embodiment 2, the motor vehicle does not perform such a connection to the server 1-3. For example, a connection time of the surrounding server 1-3 is estimated by the server connection-time estimation unit 119. Because the management unit 113 holds running route information, it is possible to verify that the motor vehicle will return to the server 1-2 when the motor vehicle runs to some extent. Here, when a connection time of the server 1-3 is defined as a period of one second by the server connection-time estimation unit 119 and in a case in which determination is performed in that there would not be any disturbance in the controls of the motor vehicle and/or in the running thereof even if no communication is performed during the period of one second, the motor vehicle does not perform such a connection to the server 1-3, so that a state is selected in which the communication is disrupted until the motor vehicle returns within the coverage area of the server 1-2. The case in which there would not be any disturbance in the controls of a motor vehicle 20 and/or in the running thereof herein designates, during the period of non-connection time of the motor vehicle 20 with the server 1-3: a case in which the controls of a motor vehicle(s) are not performed by using communications because of an accident existing in the surroundings; a case in which there is no arbitration on running controls and/or in a running route being intervened, due to a motor vehicle's lane changeover and/or a right or left turn with respect to a surrounding motor vehicle(s) 20 of the motor vehicle 20 and/or an emergency motor vehicle thereof; and/or a case like these. Meanwhile, in cases other than the cases described herein, a non-connection time with the server 1-3 is not made in a case in which the safety of the motor vehicle 20 is not maintained.

According to this arrangement, it is possible to curb reproduction of data with respect to the server 1-3 when a changeover takes place from the server 1-2 to the server 1-3, and to curb reproduction of data on server information to the server 1-2 when a changeover takes place from the server 1-3 to the server 1-2.

Next, a changeover point of location of server occurs when the motor vehicle exits outside of the coverage area of the server 1-1. In the related art, changeovers take place to a server 1-5 when a changeover takes place from the server 1-2 to the server 1-1, and when the motor vehicle exits outside of the coverage area of the server 1-1.

However, in Embodiment 2, the motor vehicle does not perform such a connection to the server 1-1 when the motor vehicle exits outside of the coverage area of the server 1-2, so that the motor vehicle performs the running in the non-connection state, and performs the connection with the server 1-5. For example, the running route is verified by the server determination unit 117, and the running is performed for a time to a slight extent, whereby it is possible to verify that the motor vehicle enters within a coverage area of the server 1-5. In a similar manner to before, road information or the like in the surroundings of a motor vehicle(s) is acquired, and verification is performed whether or not controls due to an accident and/or inter-vehicle controls are performed. When a connection time of the server 1-1 is verified as one second, and in a case in which determination is performed in that there would not be any disturbance in the controls of the motor vehicle 20 and/or in the running thereof even if no communication is performed during the period of one second, the motor vehicle does not perform such a connection to the server 1-1, but performs the connection to the server 1-5.

Because of this, the changeovers of servers take place in the related art for five times in FIG. 12 in its entirety, whereas, in the configuration in the embodiment, the changeovers of servers are ended by taking them for two times in the running over the same distance. The changeovers of servers can be curbed for two times, and accordingly, it is possible to curb the data for reproducing in accordance with the server 1-1 for two times. Meanwhile, as for the determination on a non-connection time, a threshold value may be set in which a motor vehicle determines its safety in every service even when it does not make connection, so that the threshold value is transmitted as motor vehicle information, and, at a time when determination on the connection is performed, connection with the server 1-1 is not made if its non-connection time is shorter than the threshold value having been transmitted from the motor vehicle. In another manner, a parameter is calculated by the server 1-1 from the DM provision server 5 and/or from motor vehicle information in which, for every service request having been received from a user, the safety is conceivable even in the non-connection, and connection with the server 1-1 is not made if a non-connection time with the server 1-1 is shorter than the parameter.

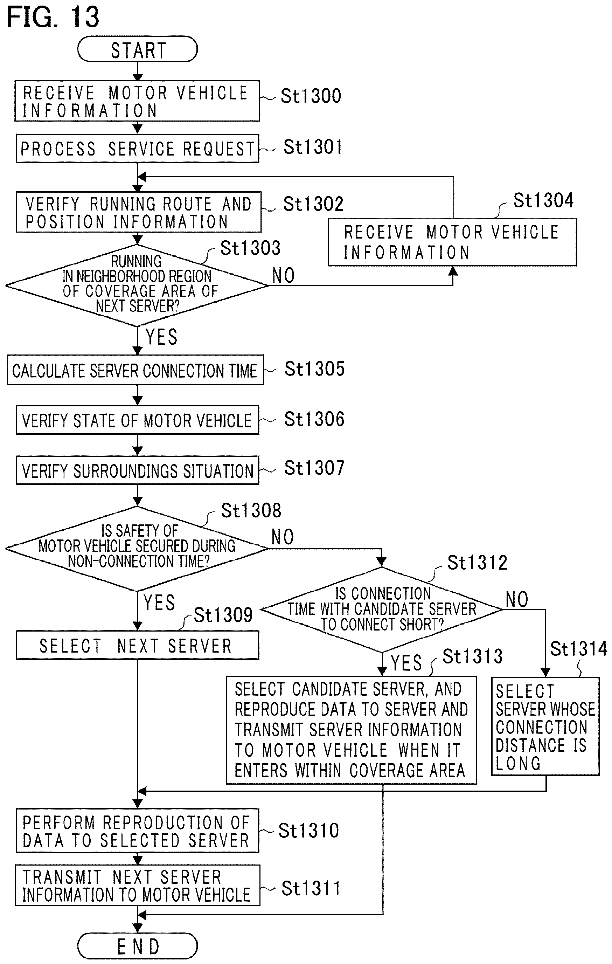

In FIG. 13, the explanation will be made for a flowchart showing processing procedures of the server selection device 11 in Embodiment 2.

The same processing is carried out from Step St1300 up to Step St1304 as the processing corresponding to those portions in Embodiment 1; thus, their explanation is omitted.

At Step St1305, by using coverage area information of other servers, speed information of a motor vehicle(s) and running route information thereof in the management unit 113, calculated are: a server connection time; a time until a next server; a time to be connected to the host server itself in the next time; and its non-connection time. As for a calculation method of those times, they may be calculated on the basis of data when the running is performed at a current speed. In addition, the times may be calculated by giving consideration to deceleration in a case in which a right or left turn or the like results in speed reduction on the partway. A threshold value of the non-connection time may be defined as 1 second, or may also be defined as another value. And then, the calculation method of the times may also be a method other than that described above.

At Step St1306, determination is performed: whether there does not exist an accident and/or work in the surroundings of a running route of motor vehicle from data of the DM provision server 5; whether the motor vehicle 20 performs inter-vehicle controls with a nearby motor vehicle(s) 20; and whether there exists a possibility in that the controls are to be performed with the motor vehicle 20 while a nearby motor vehicle(s) 20 performs inter-vehicle controls with another motor vehicle or other motor vehicles 20. When determination has been performed so that there exists at least one possibility, determination is performed whether or not the motor vehicles 20 can run safely without disturbance during a non-connection time having been calculated at Step St1305 with respect to the determination which has been performed. The determination bases may be the information other than those four pieces of information described above.

At Step St1307, a state of the motor vehicle 20 is verified so as to determine whether the motor vehicle 20 is safe (whether there would not be any disturbance in the running of the motor vehicle 20) without having communications with a server 1. The state of a motor vehicle 20 in the embodiment designates a state in which running controls of the motor vehicle 20 are performed by using the communications, or not performed thereby. It can be said that: for example, the state designates a case in which inter-vehicle communications and/or communications through the server 1 are performed with respect to another motor vehicle or other motor vehicles 20 and/or with respect to an emergency motor vehicle, in order to perform a motor vehicle's lane changeover and/or a right or left turn; or the state designates a case in which adjustment controls and/or motor vehicle controls are performed. It is very dangerous if communications with a server 1 are disconnected in the middle of performing a motor vehicle's lane changeover in order to curb the amount of data, because there exists a possibility of collision with another motor vehicle 20, or collision with a guard rail, a wall and/or the like. For this reason, determination is performed whether there would be any danger posed during a period of non-connection between the motor vehicle 20 and the server 1.

At Step St1308, the processing proceeds to Step St1312 when the safety of the motor vehicle 20 cannot be secured during a time of non-connection at Step St1306 and Step St1307 (when there would be any disturbance in the running of the motor vehicle 20), whereas, when the safety can be secured, the processing proceeds to Step St1309.

Because determination has been performed at Step St1308 so as to be safe, a server 1 whose connection time is long is selected at Step St1309, without making connection to a server 1 to have become a subject-matter next for its connection for a time to a slight extent; and, at Step St1310, reproduction of service request information and/or that of motor vehicle information and the like are performed with respect to the server 1 having been selected, and, at Step St1311, information of the server 1 having been connected is transmitted with respect to the motor vehicle 20.

At Step St1312, the processing proceeds to Step St1313 in a case in which determination has been performed so that the safety of the motor vehicle 20 cannot be secured during a time of non-connection, and further in a case in which determination is performed so that the safety of the motor vehicle 20 cannot be secured during a connection time with a next server 1, whereas, in another case other than the aforementioned cases, the processing proceeds to Step St1314.

At Step St1313, in a case in which determination has been performed at Step St1312 so that the safety cannot be secured because a connection time with a server 1 scheduled to connect next is too short, connection is not made to a next candidate server 1 when a motor vehicle exists from a coverage area of the server 1 currently making connection, whereas, at a time when the motor vehicle enters within a coverage area of the candidate server 1 to connect next, reproduction of data on server information and that of data on service information are performed with respect to the server having been selected, and server information is transmitted with respect to the motor vehicle, so that its connection is promoted. According to this arrangement, a margin is created in terms of a connection time with the server 1 having been selected.

At Step St1314, a server 1 is selected with which a running distance is long similarly to Embodiment 1, in a case in which the safety is secured at Step St1312. The processing moves to Step St1310, the same processes follow from this time onward.

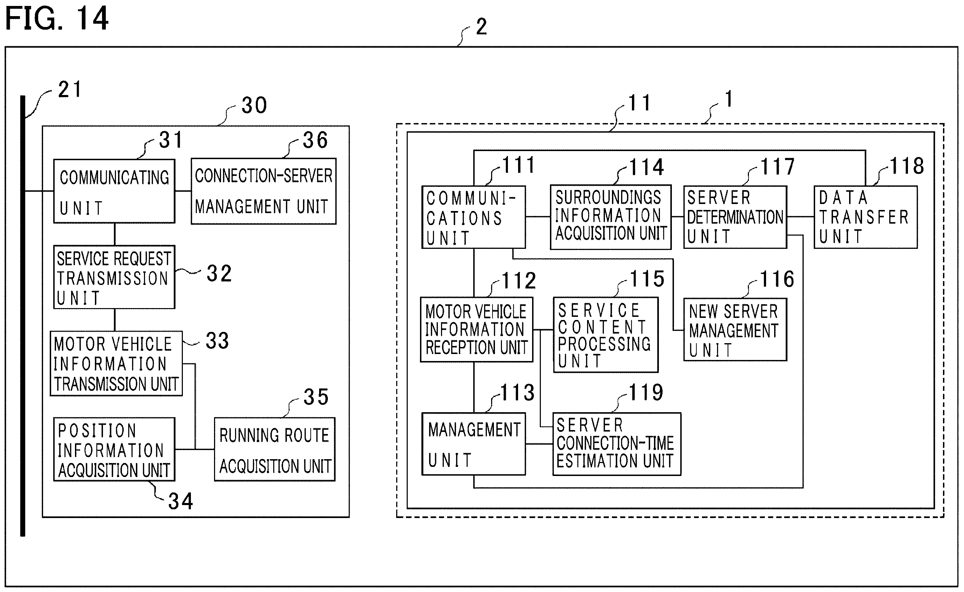

FIG. 14 is a block diagram illustrating a server selection system according to Embodiment 2, which differs in its configuration from that in the server selection system according to Embodiment 1; the server connection-time estimation unit 119 in the server selection system according to Embodiment 2 is added to its server selection device 11.

In the present disclosure of the application concerned, various exemplary embodiments and implementation examples are described; however, various features, aspects and functions described in one or a plurality of embodiments are not necessarily limited to the applications of a specific embodiment(s), but are applicable in an embodiment(s) solely or in various combinations.

Therefore, limitless modification examples not being exemplified can be presumed without departing from the scope of the technologies disclosed in Description of the disclosure of the application concerned. For example, there arise cases which are included as a case in which at least one constituent element is modified, added or eliminated, and further a case in which at least one constituent element is extracted and then combined with a constituent element(s) of another embodiment.

### Explanation of Numerals and Symbols

Numeral "1" designates a server; "5," DM provision server; "11," server selection device; "111," communications unit; "112," motor vehicle information reception unit; "113," management unit; "114," surroundings information acquisition unit; "115," service content processing unit; "116," new server management unit; "117," server determination unit; and "118," data transfer unit.

## Claims

1. A server selection device provided in a plurality of servers each being placed along a running route of a motor vehicle and being selected in accordance with a running position of the motor vehicle to perform transmission/reception of information, for use in motor vehicle running, mutually with respect to the motor vehicle, for selecting a server to connect to a motor vehicle, the server selection device, comprising:
a communications unit for performing communications with a dynamic map provision server for providing a dynamic map for use in an operation of said server and in that of a motor vehicle;
a management unit for managing motor vehicle information being acquired, and a coverage area of said server;
a motor vehicle information reception unit for receiving motor vehicle information;
a surroundings information acquisition unit for acquiring a traffic situation and accident information from said dynamic map provision server;
a service content processing unit for processing a server request transmitted from a motor vehicle, and for performing a service response to the motor vehicle;
a new server management unit for performing transmission/reception of data with a new server when the new server is placed; and
a server determination unit for determining a server to connect a motor vehicle next thereto, wherein
the server determination unit selects, from a running route of a motor vehicle and coverage area information of a server, one server from a plurality of servers capable of connecting the motor vehicle to which a connection time is longer than another server capable of connecting the motor vehicle, and transmits to the motor vehicle server information on a server being selected to connect next.

2. The server selection device as set forth in claim 1, wherein the server determination unit transmits with respect to a subject-matter motor vehicle a connection destination of a server whose connection situation is stabler than another server, when determination is performed so that it is not possible to select a server whose connection distance is longer than another server from information of said dynamic map provision server on the subject-matter motor vehicle and from a situation of a processing load of a server.

3. The server selection device as set forth in claim 1, wherein the service content processing unit performs notification to a subject-matter motor vehicle to transmit motor vehicle information of the subject-matter motor vehicle and a running route thereof, when a service request is not transmitted within a specified threshold value from the subject-matter motor vehicle.

4. The server selection device as set forth in claim 1, further comprising
a server connection-time estimation unit for performing a calculation of a connection time of a server whose connection time is required to connect to a surrounding server, wherein
the server determination unit selects, in accordance with a connection time of a server and a non-connection time thereof, one server capable of connecting longer than another server, when determination is performed so that there exists no disturbance in running of a motor vehicle during the non-connection time, and transmits to a motor vehicle server information on a server to connect next.

5. The server selection device as set forth in claim 4, wherein the server determination unit selects a server whose connection time is longer than another server, when determination is performed so that there exists a disturbance in running of a motor vehicle during a non-connection time.

6. The server selection device as set forth in claim 4, wherein the server determination unit selects a server whose radio-wave intensity is higher than another server, when determination is performed so that there exists a disturbance in running of a motor vehicle during a non-connection time, and when determination is performed so that there exists a disturbance in running of the motor vehicle even in connection to a server whose connection time is longer than the another server.

7. The server selection device as set forth in claim 4, wherein the server determination unit performs determination, from a relationship between a threshold value and a non-connection time, whether or not connection is allowed for a candidate server to connect next, when there exists the threshold value of non-connection time on a side of a motor vehicle in which determination is performed so that there exists no disturbance in running of the motor vehicle even in non-connection in every one of services therefor.

8. The server selection device as set forth in claim 4, wherein the server determination unit calculates a permissible non-connection time in which determination is performed so that there exists no disturbance in running of a motor vehicle even in non-connection in every one of services for the motor vehicle, and performs determination, from a relationship between the permissible non-connection time and a non-connection time, whether or not connection is allowed for a candidate server to connect next.

9. The server selection device as set forth in claim 4, wherein the server determination unit verifies, by using motor vehicle information and dynamic map information, whether or not there exists an accident and/or work in surroundings of a running route, or whether or not controls are performed with another motor vehicle; and the server determination unit performs determination whether or not connection is allowed for a candidate server to connect next, by taking into consideration whether or not there exists no disturbance in running of the motor vehicle without performing controls on the motor vehicle during a non-connection time calculated by the server connection-time estimation unit.

10. A server selection system, comprising:
the server selection device as set forth in any one of claim 1 through claim 9; and
a connection-server management terminal device mounted on a motor vehicle, and provided therein with:
a communicating unit for performing communications with said server and said dynamic map provision server;
a connection-server management unit for performing management of server information on a connection destination of said server;
a service request transmission unit for transmitting with respect to said server a service request where on-vehicle personnel of the motor vehicle sets with respect to said server;
a motor vehicle information transmission unit for transmitting with respect to said server position information of the motor vehicle and a running route thereof;
a position information acquisition unit for generating position information of the motor vehicle; and
a running route acquisition unit for generating a running route.
